Europäisches Patentamt

(19) European Patent Office

Office européen des brevets

(11) Veröffentlichungsnummer: **0 184 210**
**B1**

(12) **EUROPÄISCHE PATENTSCHRIFT**

(45) Veröffentlichungstag der Patentschrifft:
21.03.90

(21) Anmeldenummer: 85115483.1

(22) Anmeldetag: 05.12.85

(51) Int. Cl. ⁵: **H 04 L 12/28,** H 04 L 5/16,
H 04 B 17/02

(54) Datenübertragungseinrichtung.

(30) Priorität: 05.12.84 DE 3444361

(43) Veröffentlichungstag der Anmeldung:
11.06.86 Patentblatt 86/24

(45) Bekanntmachung des Hinweises auf die Patenterteilung:
21.03.90 Patentblatt 90/12

㊾ Bennante Vertragsstaaten:
AT BE CH DE FR GB IT LI NL SE

(56) Entgegenhaltungen:
MICROPROCESSORS & MICROSYSTEMS, Band 3, Nr.
9, November 1979, Selten 413-420, IPC Business
Press, New York, US; A. CLEMENTS: "Computer
system buses"

PATENTS ABSTRACTS OF JAPAN, Band 4, Nr. 170,
22. November 1980, Selte 122 E 35; & JP - A - 55 118
249 (YOKOGAWA DENKI SEISAKUSHO K.K.)
11.09.1980

PATENTS ABSTRACTS OF JAPAN, Band 5, Nr. 181,
20. November 1981, Selte 84 E 83; & JP - A - 56 109
056 (SHINKO DENKI K.K.) 29-08-1981

AFIPS CONFERENCE PROCEEDINGS 1984
NATIONAL COMPUTER CONFERENCE, 9.-12. Juli
1984, Las Vegas, Selten 677-683, AFIPS Press,
Reston, Virginia, US; J.B. JORDAN et al."LCNET:
Ethernet concepts+ubiquitous RS232C ports low cost
network"

(73) Patentinhaber: Siemens Aktiengesellschaft
Wittelsbacherplatz 2
D-8000 München 2 (DE)

(72) Erfinder: Narjes, Ferdinand
Tölzer Strasse 41
D-8000 München 70 (DE)

2

**Beschreibung**

Die Erfindung bezieht sich auf eine wie im Oberbegriff des Patentanspruchs 1 angegebene Datenübertragungseinrichtung.

Eine derartige Datenübertragungseinrichtung ist bereits aus der Druckschrift "Microprocessors & Microsystems", Band 3, Nr. 9, November 1979, Seiten 413 bis 420 bekannt. Bei der bekannten Datenübertragungseinrichtung sind mehrere Stationen über einen Datenbus mit einer Zentralstation verbunden. Sowohl der Zentralstation als auch den daran angeschlossenen Stationen ist jeweils eine Koppelvorrichtung zugeordnet. Die Koppelvorrichtungen enthalten jeweils zwei über eine Bus-Schnittstelle in Kette geschaltete Pegelwandler. Die zwischen den beiden Pegelwandlern liegende Bus-Schnittstelle ist an den Datenbus angeschlossen. Die beiden Pegelwandler werden jeweils durch ein Steuersignal so gesteuert, daß entweder der empfangsseitige oder der sendeseitige Pegelwandler aktiviert ist. Um sicherzustellen, daß immer nur eine Station sendet, werden die Steuersignale aus Adressen abgeleitet, die über einen Adressbus übertragen werden.

Es gibt jedoch Datenübertragungseinrichtungen, bei denen auf andere Art sichergestellt ist, daß immer nur eine Station sendet und bei denen kein Adressbus zur Verfügung steht.

Ferner ist aus der DE-AS-2 251 608 bereits eine Datenübertragungseinrichtung bekannt, bei der Modems der Stationen Tonfrequenzimpulse an eine Busleitung abgeben. Bei jener Datenübertragungseinrichtung handelt es sich um eine Fernwirkeinrichtung. Wenn die Fernwirkstation ein Impulstelegramm bzw. Datenprotokoll abgeben will, gibt sie ein in der Fernwirkeinrichtung ohnehin zur Charakterisierung einer Sendebefugnis oder Empfangsbereitschaft vorhandenes Steuerkriterium ab, das unter anderem einen dem Sendemodulator des Modems nachgeschalteten Schaltverstärker aktiviert oder deaktiviert. Dieser Schaltverstärker und ein weiterer Schaltverstärker ermöglichen es, für das Modem ein gemeinsames Sende- und Empfangsfilter zu verwenden. Die bekannte Station kann an eine Vierdrahtbusleitung für Halbduplexbetrieb angeschlossen werden. Hierfür ist eine Koppelvorrichtung erforderlich.

Koppelvorrichtungen zur Ankopplung des Modems einer Fernwirkstation an eine Vierdrahtleitung sind aus der DE-AS-2 048 140 bekannt. Bei einer Ausführungsform sind mehrere Gabeln vorgesehen, bei einer anderen Ausführungsform ist die Kopplungsvorrichtung aus mehreren rückwirkungsfreien Übertragungsvierpolen zusammengesetzt.

Ferner sind bereits Sender und Empfänger für Datensignale bekannt, die Gleichspannungs- oder Gleichstromimpulse abgeben bzw. empfangen. Dabei sind unsymmetrische und symmetrische Schnittstellen für Punkt-zu-Punkt-Verbindungen oder Mehrfachverbindungen bekannt. Eine Reihe von seriellen Schnittstellen erlauben nur Punkt-zu-Punkt-Verbindungen, da sich an eine Leitung immer nur ein Treiber anschließen läßt. Dies ist z. B. bei den weit verbreiteten Schnittstellen nach EIA-Standard RS 232 C, RS-423 A, RS-422 A und den entsprechenden CCITT-Schnittstellen V24/V28, V10, V11, X26, X27 der Fall. Diese Schnittstellen sind z. B. aus der Druckschrift CCITT, Yellow Book, Vol. VIII, Fascicle VIII.I, Seiten 27 bis 42 43 bis 55, 97 bis 112, 161 bis 165 und Fascicle VIII.2, Seite 190 bekannt. Für viele Anwendungen ist dies zu wenig.

Ferner ist aus Elektronik 6/23.3.1984, Seite 24 eine serielle Schnittstelle nach EIA-Standard RS 485 bekannt, die Busverbindungen mit bis zu 32 Treibern gestattet.

Es gibt jedoch eine Vielzahl von Steuer- und Auswerte-Rechnern, die mit einer seriellen Punkt-zu-Punkt-Schnittstelle versehen und als Zentralstation bzw. Leitzentrale einer Datenfernübertragungseinrichtung geeignet sind.

Aufgabe der Erfindung ist es, eine Datenübertragungseinrichtung der eingangs genannten Art derart auszubilden, daß sich die der Zentralstation zugeordnete Koppelvorrichtung hinsichtlich der Richtung des Datenflusses durch die Stationen steuern läßt.

Gemäß der Erfindung wird die Datenübertragungseinrichtung der eingangs genannten Art zur Lösung dieser Aufgabe in der im kennzeichnenden Teil des Patentanspruchs 1 angegebenen Weise ausgebildet. Dabei kann die der Zentralstation zugeordnete Koppelanordnung unmittelbar oder über Modems einer Übertragungseinrichtung an die Zentralstation angeschlossen sein. Als Zentralstation bzw. Leitstation dient dabei insbesondere ein Rechner.

Durch diese Maßnahmen ergibt sich in vorteilhafter Weise eine Datenübertragungseinrichtung, bei der die Steuerung der der Zentralstation zugeordneten Koppelvorrichtung ohne Steuerleitung zwischen Koppelvorrichtung und Zentralstation auskommt. Dies ist insbesondere dann von Vorteil, wenn zwischen der Koppelvorrichtung und der Zentralstation ein Modem angeordnet ist.

Die Datenübertragungseinrichtung ist besonders geeignet für Fernwirkeinrichtungen zur Übertragung von Betriebszustandsmeldungen von Zwischenstellen bzw. Verstärkerfeldern einer Nachrichtenübertragungseinrichtung an eine zentrale Auswerteeinrichtung.

Weitere Ausgestaltungen der Erfindung ergeben sich aus den Unteransprüchen.

Die Erfindung wird anhand des in der Figur dargestellten Ausführungsbeispieles näher erläutert.

Die Figur zeigt eine Datenübertragungseinrichtung mit einer Zentralstation, die über eine Koppelvorrichtung an Stationen mit paralleler Bus-Schnittstelle verbunden ist, und zwar mit Steuerung der Koppelvorrichtung durch die Stationen über eine Steuerleitung.

Bei der in der Figur gezeigten Fernwirkeinrichtung sind mehrere Stationen an den Eingang C und den Ausgang B der Zentralstation 1 angeschlossen. Die Zentralstation bzw. Leitzentrale ist insbesondere durch einen Rechner gebildet und hat an ihrem Eingang C und ihrem Ausgang B eine serielle Standard-Schnittstelle für Punkt-zu-Punkt-Übertragung, insbesondere eine Schnittstelle RS 232 C. Von einer Zahl von n Stationen sind in der Figur nur die Stationen $2_1$ und $2_n$ dargestellt.

Die Stationen $2_1$ ... $2_n$ sind gleich aufgebaut und enthalten jeweils einen Datensender 5 und einen Datenempfänger 6. Sie werden über die Datenleitung 7 aufgerufen und geben in zeitlicher Folge über die Datenleitung 7 Impulstelegramme bzw. Datenprotokolle an den Eingang C der Zentralstation 1 ab.

Die Empfänger 6 der Stationen $2_1$ ... $2_n$ sind jeweils über eine Koppelvorrichtung $3_1$ ... $3_n$ an die Datenleitung 7 angeschlossen, so daß sie sich durch die Zentralstation nach den hierfür bekannten Verfahren steuern, synchronisieren bzw. aufrufen lassen.

Jede Station $2_1$ ... $2_n$ ist mit einem Interface bzw. mit einer Koppelvorrichtung $3_1$ ... $3_n$ versehen, deren Empfangsteil einen Pegelwandler 32 und deren Sendeteil einen Pegelwandler 31 enthält. Die Steuersignalquelle 4 steuert die Pegelwandler 31 und 32 in der Weise, daß bei sendender Station der Pegelwandler 31 und bei empfangsbereiter Station der Pegelwandler 32 aktiviert ist. Die abwechselnde Aktivierung und Deaktivierung der Pegelwandler 31 und 32 erfolgt dadurch, daß der Pegelwandler 31 mit einem nicht invertierenden, der Pegelwandler 32 dagegen mit einem invertierenden Steuereingang an den Ausgang a der Steuersignalquelle 4 angeschlossen ist.

Die Richtung des Datenflusses durch die Koppelvorrichtungen $3_1$ ... $3_n$ der Stationen $2_1$ ... $2_n$ wird vom Pegel der Steuerleitung a bestimmt. Diese Steuerleitung a wird durch die zu überwachenden Stationen $2_1$ ... $2_n$ aktiviert.

Die Pegelwandler 31 und 32 sind Serienbausteine für eine serielle Bus-Schnittstelle, insbesondere die Schnittstelle RS 485. Sie setzen den Pegel der Busschnittstelle in TTL-Pegel um bzw. umgekehrt. Der Ausgang des Pegelwandlers 31 ist bei deaktiviertem Pegelwandler 31 hochohmig.

Die beiden Pegelwandler 31 und 32 sind über die serielle Bus-Schnittstelle 30 in Kette geschaltet. Der Eingang des Pegelwandler 31 ist über den Datenausgang b an den Datensender 5, der Ausgang des Pegelwandlers 32 über den Dateneingang c an den Datenempfänger 6 der Station $2_1$ ... $2_n$ angeschlossen. Die seriellen Bus-Schnittstellen 30 sind über die Datenleitung bzw. den Datenbus 7 parallel geschaltet und an die der Zentralstation 1 zugeordnete Koppelvorrichtung 9 geführt, die als Pegelwandler dient.

Der Datenbus 7 ist durch die Steuerleitung 8 ergänzt. Diese Steuerleitung ist an die Inverter 33 der Koppelvorrichtungen $3_1$ ... $3_n$ angeschlossen und führt an die Steuereingänge der Pegelwandler 91 und 92 der Koppelvorrichtung 9.

Die in der Koppelvorrichtung 9 enthaltenen Pegelwandler 91 und 92 sind über die serielle Bus-Schnittstelle 90 zueinander in Kette geschaltet. Der Eingang des Pegelwandlers 91 ist über den Pegelumsetzer 94 an den Datenausgang B der Zentralstation 1 angeschlossen. Der Ausgang des Schnittstellenwandlers 92 ist über den Pegelumsetzer 93 an den Dateneingang C der Zentralstation 1 geführt.

Die Koppelvorrichtung 9 überträgt Daten in beiden Richtungen von der Punkt-zu-Punkt-Schnittstelle, insbesondere RS 232 C der Zentralstation bzw. des Steuer- und Auswerte-Rechners zur symmetrischen Doppelstrom-Schnittstelle, insbesondere RS 485 des Datenbusses oder umgekehrt.

Im Verbindungsweg zwischen Zentralstation 1 und Koppelvorrichtung 9 liegen die Modems 11 und 12. Die Modems 11 und 12 können bei vergleichsweise kleinen Entfernungen zwischen Zentralstation 1 und Koppelvorrichtung 9 durch eine unmittelbare Verbindung ersetzt sein.

Bei sendender Station $2_1$ ... $2_n$ gibt die Steuersignalquelle 4 die logische Eins ab und aktiviert den sendeseitigen Pegelwandler 31. Am Ausgang des Inverters 33, der einen offenen Kollektorausgang hat, erscheint die logische Null. Über die Steuerleitung 8 wird in der Koppelvorrichtung 9 der empfangsseitige Pegelwandler 92 aktiviert und der sendeseitige Pegelwandler 91 deaktiviert. Die Station $2_1$ ... $2_n$ kann Daten über den Pegelwandler 31 und die Pegelwandler 92, 93 an die Zentralstation 1 übertragen.

Bei empfangsbereiter Station $2_1$ ... $2_n$ gibt die Steuersignalquelle 4 eine logische Null ab und aktiviert den empfangsseitigen Pegelwandler 32. Der Ausgang des Inverters 33 ist hochohmig. Da die Steuerleitung 8 über den Widerstand 95 an ein Steuerpotential von z. B. 5 V geführt ist, nimmt die Steuerleitung 8 den logischen Zustand Eins an. In der Koppelvorrichtung 9 wird der sendeseitige Pegelwandler 91 aktiviert und der empfangsseitige Pegelwandler 92 deaktiviert.

Die Zentralstation 1 kann Daten über die zwei Modems 11, 12, die Pegelwandler 94 und 91 und den Pegelwandler 32 an den Datenempfänger 6 jedes Gerätes $2_1$ ... $2_n$ übertragen. Die Widerstände 96 bzw. 97 schließen die Datenleitung 7 niederohmig ab. Die Steuerleitung 8 ist über den Pegelwandler 98 an einen Steuereingang des Modems 12 mit der Bedeutung "Sendeteil einschalten" (S2) geführt. Der Steuerausgang A der Zentralstation 3 ist an einen Steuerausgang des Modems 11 mit der Bedeutung "Sendeteil einschalten" (S2) geführt.

Sind Modems 11, 12 erforderlich, so ist die Steuerleitung 8 somit doppelt ausgenutzt.

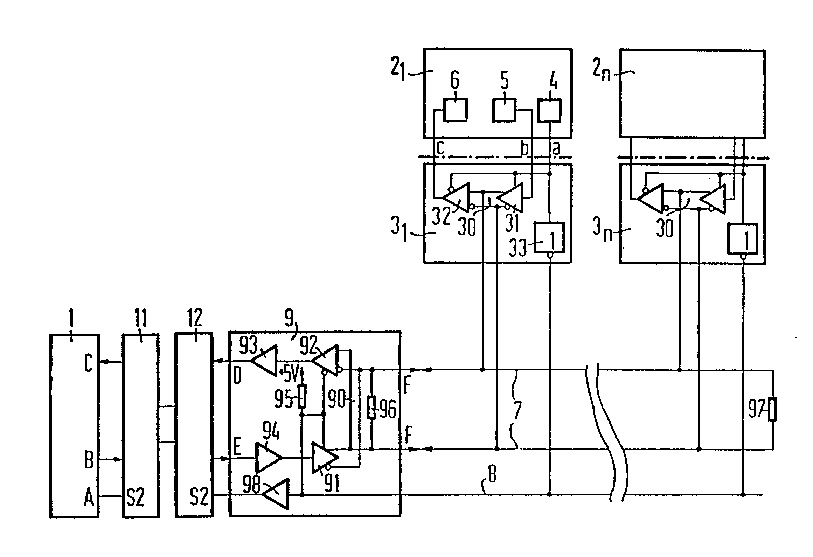

Nach Fig. 1 sind zwischen Rechner bzw. Zentralstation 1 und Koppelvorrichtung 9 zwei Modems 11 und 12 mit Datenübertragungsleitung zur Fernübertragung der Daten zwischen dem Steuer- und Auswerte-Rechner und den Stationen $2_1$ ... $2_n$ eingefügt.

Die Richtung des Datenflusses durch die Interface bzw. Koppelvorrichtungen $3_1$ ... $3_n$ der Geräte bzw. Stationen $2_1$ ... $2_n$ sowie durch die Koppelvorrichtung 9 wird vom Pegel der Steuerleitung 8 bestimmt. Diese Steuerleitung 8 wird durch die zu überwachenden Geräte bzw. Stationen $2_1 \ldots 2_n$ aktiviert.

Der Eingang E bzw. Ausgang D der als bidirektionaler Pegelwandler ausgebildeten Koppelvorrichtung 9 zum Rechner oder zum Modem besteht jeweils aus einer unsymmetrischen Doppelstrom-Schnittstelle für Punkt-zu-Punkt-Verbindung, insbesondere RS 232 C. Die Pegelwandler 94, 92 im Innern der Koppelvorrichtung 9 wandeln den jeweiligen Schnittstellenpegel in Standardpegel, insbesondere TTL, CMOS um, die den Pegelwandlern 93, 91 zugeführt werden. Die Pegelwandler 93, 91 wandeln die Standardpegel wieder in die jeweiligen Schnittstellenpegel um. Das als Ausgang und Eingang in Richtung zu den zu überwachenden Geräten dienende Klemmenpaar F, an das der Datenbus 7 angeschlossen ist, besteht aus einer symmetrischen Doppelstrom-Schnittstelle für serielle Zweirichtungs-Datenübertragung.

Bei der in der Figur gezeigten Datenübertragungseinrichtung finden z. B. folgende Bausteine Verwendung.

Pegelwandler
31 und 32 : SN 75 176
91 und 92 : SN 75 176
93       : 1/4 SN 75 188
94       : 1/4 SN 75 154
98       : 1/4 SN 75 188
98a     : 1/4 SN 75 154
Inverter
33       : SN 74 LS 05

## Patentansprüche

1. Datenübertragungseinrichtung mit einer Zentralstation (1) und mit jeweils einen Datensender (5) und einen Datenempfänger (6) enthaltenden Stationen ($2_1 \ldots 2_n$), wobei die Stationen ($2_1 \ldots 2_n$) über einen Datenbus (7) mit der Zentralstation (1) verbunden sind, von der Zentralstation (1) und den Stationen ($2_1 \ldots 2_n$) zu ein und demselben Zeitpunkt nur eine sendet, die Zentralstation (1) und/oder die Stationen ($2_1 \ldots 2_n$) jeweils einen Steuersignalanschluß (A; a) aufweisen, der bei sendender Zentralstation (1) bzw. Station ($2_1 \ldots 2_n$) ein erstes Steuerkriterium und bei empfangsbereiter Zentralstation (1) bzw. Station ($2_1 \ldots 2_n$) ein zweites Steuerkriterium abgibt und den Stationen ($2_1 \ldots 2_n$) und der Zentralstation (1) jeweils eine Koppelvorrichtung ($3_1 \ldots 3_n$; 9) zugeordnet ist, dadurch gekennzeichnet, daß den Stationen ($2_1 \ldots 2_n$) zugeordnete Koppelvorrichtungen ($3_1 \ldots 3_n$) jeweils ein Verknüpfungsglied (33) mit offenem Kollektorausgang enthalten, dessen Eingang an den Steuersignalanschluß (a) angeschlossen und dessen Ausgang an eine die Koppelvorrichtungen ($3_1 \ldots 3_n$) verbindende Steuerleitung (8) geführt ist, und daß die Pegelwandler (91, 92) der der Zentralstation (1) zugeordneten Koppelvorrichtung (9) mit ihren Steuereingängen an die Steuerleitung (8) angeschlossen sind.

2. Datenübertragungseinrichtung nach Anspruch 1, dadurch gekennzeichnet, daß die Steuerleitung (8) über einen Pegelwandler (98) an einen Steuereingang eines zwischen der Koppelvorrichtung (9) und der Zentralstation (1) angeordneten Modems (12) geführt ist.

3. Datenübertragungseinrichtung Anspruch 1 oder 2, dadurch gekennzeichnet, daß die Bus-Schnittstelle (30, 90) der Koppelvorrichtungen ($3_1 \ldots 3_n$; 9) eine symmetrische Doppelstrom-Schnittstelle für serielle Datenübertragung ist.

4. Datenübertragungseinrichtung nach einem der Ansprüche 1 bis 3, gekennzeichnet durch eine Ausbildung als Fernwirkeinrichtung zur Übertragung von Betriebszustandsmeldungen von Zwischenstellen bzw. Verstärkerfeldern einer Nachrichtenübertragungseinrichtung an eine zentrale Auswerteeinrichtung.

5. Datenübertragungseinrichtung nach einem der Ansprüche 1 bis 4, dadurch gekennzeichnet, daß die Koppelvorrichtungen ($3_1 \ldots 3_n$; 9) über eine Zweidraht-Datenleitung (7) für Halbduplex-Datenübertragung miteinander verbunden ist.

6. Datenübertragungseinrichtung nach Anspruch 5, dadurch gekennzeichnet, daß die der Zentralstation (1) zugeordnete Koppelvorrichtung (9) zwischen einem Datenausgang (B) und einem Dateneingang (C) der Zentralstation (1) zwei über eine Bus-Schnittstelle (90) in Kette geschaltete Pegelwandler (91, 92) enthält und daß der Datenbus an die Bus-Schnittstelle (90) angeschlossen ist.

7. Datenübertragungseinrichtung nach Anspruch 5, dadurch gekennzeichnet, daß die den Stationen ($2_1 \ldots 2_n$) zugeordneten Koppelvorrichtungen ($3_1 \ldots 3_n$) zwischen einem Datenausgang (b) und einem Dateneingang (c) der betreffenden Station zwei über eine Bus-Schnittstelle (30) in Kette geschaltete Pegelwandler (31, 32) enthalten und daß jeweils die zwischen den beiden Pegelwandlern (31, 32) liegende Bus-Schnittstelle (30) an den Datenbus (7) angeschlossen ist und daß die beiden Pegelwandler (31, 32) durch die in der Station gebildeten Steuerkriterien derart steuerbar sind, daß bei sendender Zentralstation (1) ein an den Datenausgang (B) angeschlossener Pegelwandler (94, 91) und bei empfangsbereiter Zentralstation (1) ein dem Dateneingang (C) vorgeschalteter Pegelwandler (92, 93) aktiviert ist.

## Revendications

1. Dispositif de transmission de données comportant un poste central (1) et des postes ($2_1 \ldots 2_n$), qui contiennent respectivement un émetteur de données (5) et un récepteur de données (6), et dans lequel les postes ($2_1 \ldots 2_n$) sont reliés par l'intermédiaire d'un bus de transmission de données (7) au poste central (1), seul l'un des

postes incluant le poste central (1) et les postes (2₁ ... 2ₙ) émet à un même instant, le poste central (1) et/ou les postes (2₁ ... 2ₙ) possèdent chacun une borne (A; a) de transmission d'un signal de commande, qui, dans le cas ou le poste central (1) ou un poste (2₁ ... 2ₙ) émet, délivre un premier critère de commande et, dans le cas ou le poste central (1) ou le poste (2₁ ... 2ₙ) est prêt à la réception, délivre un second critère de commande, un dispositif de couplage (3₁ ... 3ₙ; 9) étant associé respectivement aux postes (2₁ ... 2ₙ) et au poste central (1), caractérisé par le fait que des dispositifs de couplage (3₁ ... 3ₙ) associés aux postes (2₁ ... 2ₙ) contiennent respectivement un circuit logique (33) possédant une sortie à collecteur ouvert, l'entrée de ce circuit étant raccordée à la borne (A) de transmission du signal de commande tandis que la sortie est raccordée à une ligne de commande (8) reliant les dispositifs de couplage (3₁ ... 3ₙ), et que les convertisseurs de niveau (91, 92) du dispositif de couplage (9) associé au poste central (1) sont raccordés par leurs entrées de commande à la ligne de commande (8).

2. Dispositif de transmission de données suivant la revendication 1, caractérisé par le fait que la ligne de commande (8) est raccordée, par l'intermédiaire d'un convertisseur de niveau (98), à une entrée de commande d'un modem (12) branché entre le dispositif de couplage (9) et le poste central (1).

3. Dispositif de transmission de données suivant la revendication 1 ou 2, caractérisé par le fait que l'interface (30, 90) de liaison des dispositifs de couplage (3₁ ... 3ₙ; 9) au bus est une interface symétrique à courant double pour une transmission de données en série.

4. Dispositif de transmission de données suivant l'une des revendications 1 à 3, caractérisé par sa réalisation sous la forme d'un dispositif de télécommande servant à transmettre des signalisations d'états de fonctionnement de postes intermédiaires ou de sections d'amplification d'un dispositif de transmission d'informations à un dispositif central d'évaluation.

5. Dispositif de transmission de données suivant l'une des revendications 1 à 4, caractérisé par le fait que les dispositifs de couplage (3₁ ... 3ₙ; 9) sont reliés entre eux par l'intermédiaire d'une ligne bifilaire de transmission de données (7) pour une transmission de données en semi-duplex.

6. Dispositif de transmission de données suivant la revendication 5, caractérisé par le fait que le dispositif de couplage associé au poste central (1) contient, entre sa sortie de données (B) et une entrée de données (C) du poste central (1), deux convertisseurs de niveau (91, 92) branchés selon un montage itératif par l'intermédiaire de l'interface (90) de liaison au bus, et que le bus de transmission de données est raccordé à l'interface (90) de liaison au bus.

7. Dispositif de transmission de données suivant la revendication 5, caractérisé par le fait que les dispositifs de couplage (3₁ ... 3ₙ) associés aux postes (2₁ ... 2ₙ) contiennent, entre une sortie de données (b) et une entrée de données (c) du poste considéré, un convertisseur de niveau (31, 32) branché selon un montage itératif par l'intermédiaire d'une interface (3) de liaison au bus, et que respectivement l'interface (30) de liaison au bus, qui est située entre les deux convertisseurs de niveau (31, 32), est raccordée au bus de transmission de données (7) et que les deux convertisseurs de niveau (31, 32) peuvent être commandés au moyen des critères de commande formés dans le poste, de telle sorte que, dans le cas où le poste central (1) émet, un convertisseur de niveau (94, 91) raccordé à la sortie de données (B) est activé et que, dans le cas où le poste central (1) est prêt pour la réception, un convertisseur de niveau (92, 93) branché en amont de l'entrée de données (C) est active.

## Claims

1. Data transmission arrangement comprising a central station (1) and comprising stations (2₁ ... 2ₙ) which in each case contain a data transmitter (5) and a data receiver (6), in which arrangement the stations (2₁ ... 2ₙ) are connected to the central station (1) via a data bus (7), only one of the central station (1) and the stations (2₁ ... 2ₙ) is transmitting at one and the same time, the central station (1) and/or the stations (2₁ ... 2ₙ) in each case exhibit a control signal connection (A; a) which, when the central station (1) or station (2₁ ... 2ₙ) is transmitting, outputs a first control criterion and, when the central station (1) or station (2₁ ... 2ₙ) is ready to receive, outputs a second control criterion and the stations (2₁ ... 2ₙ) and the central station (1) are in each case associated with a coupling device (3₁ ... 3ₙ; 9), characterized in that coupling devices (3₁ ... 3ₙ) associated with the stations (2₁ ... 2ₙ) in each case contain a logic element (33) with open collector output, the input of which is connected to the control signal connection (a) and the output of which is connected to a control line (8) connecting the coupling devices (3₁ ... 3ₙ), and in that the level converters (91, 92) of the coupling device (9) associated with the central station (1) are connected to the control line (8) with their control inputs.

2. Data transmission arrangement according to Claim 1, characterized in that the control line (8) is connected via a level converter (98) to a control input of a modem (12) arranged between the coupling device (9) and the central station (1).

3. Data transmission device according to Claim 1 or 2, characterized in that the bus interface (30, 90) of the coupling devices (3₁ ... 3ₙ; 9) is a balanced double-current interface for serial data transmission.

4. Data transmission device according to one of Claims 1 to 3, characterized by being constructed as teleaction facility for transmitting operational status messages from repeater stations or repeater sections of an information transmission facility to a central evaluating facility.

5. Data transmission arrangement according to one of Claims 1 to 4, characterized in that the coupling devices (3₁ ... 3ₙ; 9) are connected to one another via a two-wire data line (7) for half-duplex data transmission.

6. Data transmission arrangement according to Claim 5, characterized in that the coupling device (9), which is associated with the central station (1), contains between a data output (B) and a data input (C) of the central station (1) two level converters (91, 92) which are cascaded via a bus interface (90) and in that the data bus is connected to the bus interface (90).

7. Data transmission device according to Claim 5, characterized in that the coupling devices (3₁ ... 3ₙ), which are associated with the stations (2₁ ... 2ₙ), contain between a data output (b) and a data input (c) of the relevant station two level converters (31, 32) which are cascaded via a bus interface (30) and in that in each case the bus interface (30) located between the two level converters (31, 32) is connected to the data bus (7) and in that the two level converters (31, 32) can be controlled by the control criteria formed in the station, in such a manner that when the central station (1) is transmitting, a level converter (94, 91) connected to the data output (B) is activated and when the central station (1) is ready to receive, a level converter (92, 93) preceding the data input (C) is activated.